# EUROPEAN PATENT SPECIFICATION

(11) **EP 3 642 058 B1**
(45) Date of publication and mention of the grant of the patent: **26.07.2023**
(21) Application number: 18738200.7
(22) Date of filing: 14.06.2018
(51) Int. Cl.: B60C 23/06, B60C 23/04

(54) **WHEEL MONITORING IN A VEHICLE**
RADÜBERWACHUNG IN EINEM FAHRZEUG
SURVEILLANCE DES ROUES DANS UN VÉHICULE

(30) Priority: 19.06.2017 SE 1750775
(43) Date of publication of application: 29.04.2020
(73) Proprietor: Nira Dynamics AB, 58330 Linköping (SE)
(72) Inventor: LINDSKOG, Peter, 583 31 Linköping (SE); KARLSSON, Rickard, 582 39 Linköping (SE)
(74) Representative: Keijser Bergöö, Malin Katarina
(86) International application number: PCT/EP2018/065835
(87) International publication number: WO 2018/234152

(56) References cited:
- EP-A1- 3 178 672
- EP-A2- 0 808 731
- US-A1- 2016 167 446

## Description

### TECHNICAL FIELD

The present disclosure relates generally to systems and methods for wheel monitoring in a vehicle.

### BACKGROUND

In vehicle design, wheel monitoring is an important safety aspect, since wheel problems such as flat tires or loose wheels can easily cause accidents. Wheel monitoring also has a driving economy aspect, both due to the fact that a tire with a lower than optimal air pressure wears out faster than a correctly filled tire, and due to the fact that the fuel consumption may be lowered in a vehicle with optimal tire pressure. A wheel monitoring system may thus be both a safety system and a means for protecting the environment and avoiding unnecessary costs.

Several different types of wheel monitoring are known. WO2016/120019 describes the use of a wheel speed signal to determine a wheel anomaly such as a loose wheel or a wheel with zero tire pressure. US7111607 and US20160167446 describe tire pressure monitoring using a sensor arranged inside the tire. US7240542, US7263458, US20080024286, US9079462, EP3178672 and EP808731 describe a more indirect tire pressure monitoring. In indirect pressure monitoring, a value representing the tire pressure may be calculated or estimated based on information related to the tire pressure provided by control and/or detection devices of the vehicle, such as e.g. an antilock braking system, a dynamic stability system, an anti-spin system and/or a traction control system. The information may e.g. include the rotational speed or angular velocity of the tire or wheel.

Indirect tire pressure monitoring may require complex calculations to determine tire under-inflations from tire pressure related information. Moreover, the connection between tire pressure related information and tire pressure is prone to external influences, such as current driving situations and road conditions. Also, vehicle specific conditions may influence tire pressure and information related thereto.

A tire pressure monitoring system is normally arranged locally within the vehicle, such as in the Electronic Control Unit (ECU) responsible for Electronic Stability Control (ESC).

### PROBLEMS WITH THE PRIOR ART

A wheel monitoring system arranged locally within a vehicle may enable a secure tire pressure safety warning when one or more of the tires are under-inflated. However, if it is desired to determine which exact tire or tires that is/are under-inflated, the software required becomes more complex. Since the Electronic Stability Control (ESC) is a safety critical system, the system is required to undergo extensive testing and verification. As a consequence of this, the system must be "frozen" well in advance of the start of production of the vehicle, and no further changes are then allowed in the software without going through extensive testing and verification again. This means that any updating of the software after production of the vehicle would be very costly.

There is thus a need for an improved wheel monitoring system.

### SUMMARY

The above described problem is addressed by a system according to claim 1.

The above described problem is further addressed by a vehicle according to claim 5.

The above described problem is further addressed by a method according to claim 6.

Preferred embodiments are the subject matter of dependent claims.

The basic wheel monitoring functionality preferably uses predefined algorithms that are stored in the vehicle processing device for determining whether there is a problem with one or more of the wheels, while the enhanced wheel monitoring functionality preferably uses algorithms that are continuously trained based on real-world vehicle data from a number of vehicles, e.g. using machine learning.

The wheel monitoring functionality may e.g. monitor the tire pressure, or detect anomalies such as loose wheels.

The at least one vehicle processing device may e.g. be an Electronic Control Unit (ECU) of the vehicle. Since the enhanced wheel monitoring functionality is not performed in a vehicle processing device such as an ECU, it is not dependent on the limited computational resources of such a processing device. The functionality may therefore be more advanced, e.g. based on machine learning techniques. At the same time, since the basic wheel monitoring functionality is arranged in the vehicle, it can be relied on to provide timely wheel related warnings without being dependent on external networks or devices.

The at least one vehicle processing device may e.g. be a number of different vehicle processing devices, between which signals are transmitted. The at least one wheel related parameter may e.g. be determined in one vehicle processing device, and the basic wheel monitoring functionality may be performed in another vehicle processing device. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Figure 1 schematically illustrates a system for wheel monitoring in a vehicle, in accordance with one or more embodiments described herein.
Figure 2 schematically illustrates a vehicle, in accordance with one or more embodiments described herein.
Figure 3 is a schematic overview of one way of operating a system for wheel monitoring in a vehicle, in accordance with one or more embodiments described herein.
Figure 4 schematically illustrates a method for wheel monitoring in a vehicle, in accordance with one or more embodiments described herein.

Embodiments of the present disclosure and their advantages are best understood by referring to the detailed description that follows. It should be appreciated that like reference numerals are used to identify like elements illustrated in one or more of the figures.

### DETAILED DESCRIPTION

A wheel monitoring system arranged in the Electronic Control Unit (ECU) responsible for Electronic Stability Control (ESC) in a vehicle is very costly to change or update after it has been "frozen" for testing and verification, which takes place well in advance of the start of production of the vehicle. This is because the ESC is a safety critical system.

In order to avoid this problem, it could be possible to arrange a wheel monitoring arrangement remote from the vehicle, and transmit the parameters needed for performing the wheel monitoring functionality via a wireless link to this wheel monitoring arrangement. However, in situations where the wireless link does not work, e.g. due to a lack of network coverage, there would in such a case be no wheel monitoring functionality in the vehicle. Further, in some countries there are regulations that require all vehicles to comprise an internal tire under-inflation warning functionality, e.g. in the form of a general tire under-inflation warning indicator.

According to this disclosure, it is therefore proposed to divide the wheel monitoring functionality into two parts, a basic wheel monitoring functionality which may e.g. be arranged in an ECU of the vehicle, and an enhanced wheel monitoring functionality which may be arranged remote from the vehicle. The basic wheel monitoring functionality preferably determines whether there is a problem with one or more of the wheels, preferably using predefined algorithms that are stored in the vehicle processing device. The enhanced wheel monitoring functionality preferably provides further information regarding the determined problem with one or more of the wheels by performing further calculations, preferably using algorithms that are continuously trained based on real-world vehicle data from a number of vehicles, e.g. using machine learning. This enables a fail-safe basic wheel monitoring functionality in the vehicle, which can be tested and verified as required and then remains unchanged, while at the same time allowing for an advanced enhanced wheel monitoring functionality which can be easily improved and updated. Since this enhanced wheel monitoring functionality is placed outside the ECU, it can be completed at a much later stage, and perhaps more importantly, updated in an easy way when production of the vehicle has started.

The wheel monitoring functionality may e.g. involve both a wheel radius analysis and a wheel vibration analysis, as described in US7263458. US7263458 describes a wheel radius analysis where the wheel radii are estimated by comparing the wheel speeds of each vehicle wheel (which may e.g. be measured by wheel speed sensors) with the vehicle's actual driving velocity. Constant driving velocity provided, the wheel speed increases when the wheel radius decreases due to tire pressure loss.

However, the wheel radius analysis may not have to actually estimate the wheel radius for each wheel - it may be enough to determine whether there has been a change in wheel radius by comparing the relation between wheel radii of different wheels over time. As long as the relation stays the same, it is unlikely that the wheel radius has changed, since that would imply the exact same change in both compared wheels. If a wheel radius analysis is made for different wheel combinations, such as for the front wheels and for the rear wheels, and for the right wheels and for the left wheels, it can be determined that a particular wheel most probably has an under-inflation problem. For example, if the wheel radius relation has changed for both the right wheels and the front wheels but not for the left wheels and the rear wheels, there is most probably an under-inflation problem with the front right wheel.

US7263458 describes a wheel vibration analysis where wheel vibration phenomena (which may be measured by wheel speed sensors) are detected within the time dependent behavior of the rotational velocity of an individual vehicle wheel. The spectral properties (e.g. the energy distribution in different frequency bands) of a wheel angular velocity signal depends on the tire pressure of the individual vehicle wheel. If the spectral properties of a wheel changes over time, this may thus be an indication of tire under-inflation.

The combination of a wheel radius analysis and a wheel vibration analysis increases the certainty of the determination of which wheel that has an under-inflation problem. If the results of both these analyses correspond, it is likely that the correct wheel has been identified. Fusion of the wheel radius analysis and the wheel vibration analysis thus increases the certainty of the wheel monitoring functionality.

In situations where more than one tire is under-inflated, the determination is generally more difficult. There may therefore be a number of different predefined tire under-inflation scenarios, from which the wheel monitoring functionality only needs to determine which one is the most likely.

WO2016/120019 describes the use of a wheel speed signal to determine a wheel anomaly such as a loose wheel or a wheel with zero pressure. The wheel speed signal is used as a basis for determining first and second detection signals, and the anomaly of e.g. a loose wheel is detected if at least one of the detection signals exceeds a threshold.

A number of different factors may be taken into account in a wheel monitoring functionality. In addition to a wheel radius analysis and a wheel vibration analysis, vehicle specific parameters, information about absolute velocity, load changes, friction, etc. may be used to improve the wheel monitoring functionality. These different factors may be combined using algorithms that can be determined using e.g. historical data. The wheel monitoring functionality may e.g. involve machine learning, e.g. using a neural network that may be trained using training data for different scenarios where wheel properties such as the tire pressure is known.

Vehicle specific parameters may e.g. be information regarding whether the vehicle is front wheel driven, rear wheel driven or all wheel driven. This information may be provided to the algorithm, or even be used to select an appropriate algorithm - it may be advantageous to use different algorithms for different types of vehicles.

Information about the type of tire, and/or whether snow chains have been mounted on any of the wheels, may also be used to improve the wheel monitoring functionality. Since different types of tire have different properties, they may react differently when the tire pressure changes. A wheel vibration analysis may thus give different results depending on the properties of the tire. A tire classification method is described in WO2015/188929. Further, a wheel vibration analysis will of course be affected by whether snow chains are mounted on the wheel.

Information about load changes in the vehicle may e.g. be used to compensate for wheel radius and/or wheel vibration differences that are unrelated to any problems with the wheels. If the vehicle is loaded unevenly, or moves uphill or downhill, a wheel radius analysis and a wheel vibration analysis will detect anomalies even though there is no wheel related problem. In order to avoid false alarms, it is therefore advantageous to compensate for load changes.

Load changes may be determined e.g. using information about axle height, longitudinal acceleration, vertical acceleration, torque, engine RPM, altitude, yaw rate, pitch, roll, and/or suspension. US8630767 describes how the load of a vehicle can be estimated based on vehicle data indicative of a current driving situation, and US8825267 describes the use of suspension information in tire pressure deviation detection for a vehicle tire. Various flags set in the at least one vehicle processor based on whether the vehicle is braking, shifting gears, reversing or has a trailer attached may assist in the determination of load changes. GPS information together with map data comprising terrain information may also assist in the determination of load changes.

Further, information about the friction between the tire and the road surface may be used to compensate for wheel radius and/or wheel vibration differences that are unrelated to any problems with the wheels. If the wheels slip, this may affect the determination of the wheel radius and/or the wheel vibration. Any information that can be used to determine slip of the wheels that is unrelated to any problems with the wheels may therefore be used to improve the wheel monitoring functionality. EP1701871 and WO2011/054363 describe various types of road condition monitoring. If it can e.g. be determined that the road condition is different for different wheels, e.g. because the vehicle is driving close to the edge of a road so that the right wheels are driving in gravel although the left wheels are driving on asphalt, this information may be used to improve the wheel monitoring functionality. Information from a temperature sensor may also assist in determining friction, especially at low temperatures.

The enhanced wheel monitoring functionality may determine problems and provide warnings regarding individual wheels, e.g. using an isolation function. Whereas calling a timely under-inflation warning is a crucial safety feature, information about which tires are under-inflated may be made later (if at all). Hence, it is advantageous to keep the basic wheel related warning functionality within the vehicle, whereas isolation can be made elsewhere. The result of the determination may be transmitted back to the ECU of the vehicle.

Tire under-inflation may appear in different scenarios. A sudden puncture may occur, which would require a quick detection. However, sometimes there is just a slow diffusion of air from the tire, which will over time lead to the tire being under-inflated. Such a slow diffusion does not necessarily have to be detected by the basic wheel monitoring functionality - it may be enough if it is detected by the enhanced wheel monitoring functionality.

The enhanced wheel monitoring functionality may also provide other wheel related information. It may e.g. be interesting to know that a tire is under-inflated even if the under-inflation has not reached the level set for issuing an alarm. This information could e.g. be visualized to the user in the form of a "closeness to alarm". It may further be interesting to monitor pressure trends for tires, in order to detect the rate by which the pressure falls, and thereby determine how soon a tire will need to be re-filled and/or how often a tire should be re-filled.

Tire wear may affect the wheel monitoring, since the wheel monitoring functionality often involves a determination of a wheel radius which is of course affected by tire wear. If the enhanced wheel monitoring functionality involves also determining tire wear, the tire wear information may be communicated to the vehicle, so that it can be compensated for in the basic wheel monitoring functionality. A method of determining tire wear is described in EP2982521.

The basic wheel monitoring functionality may also determine problems regarding individual wheels, such as exactly which tires that are under-inflated, and in situations where the reliability of this determination is high enough, the enhanced wheel monitoring functionality may not be needed.

The present disclosure relates generally to systems and methods for wheel monitoring in a vehicle. Embodiments of the disclosed solution are presented in more detail in connection with the figures.

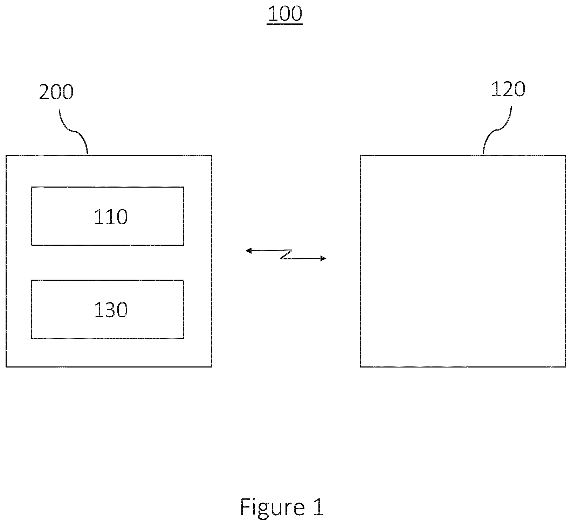

Figure 1 schematically illustrates a system 100 for wheel monitoring in a vehicle 200, in accordance with one or more embodiments described herein. The system 100 comprises at least one vehicle processing device 110, which is included in the vehicle 200, and a remote processing arrangement 120, which is separate from the vehicle 200. The remote processing arrangement 120 may e.g. be web-based or arranged in the cloud.

The remote processing arrangement 120 may also, or alternatively, be arranged in a mobile device, such as e.g. a smartphone. This enables the enhanced wheel monitoring functionality to be used even when there is no network connection, if the at least one wheel related parameter is transmitted wirelessly from the vehicle to the mobile device using e.g. Bluetooth. The system 100 also comprises at least one sensor 130, which is arranged in the vehicle 200.

The sensor 130 generates at least one wheel related measurement, and transmits this measurement to the at least one vehicle processing device 110, which performs a basic wheel monitoring functionality, determining whether there is a problem with one or more of the wheels, based on the measurement, preferably using predefined algorithms that are stored in the vehicle processing device 110. A wheel related parameter is then determined based on the at least one wheel related measurement (preferably in the at least one vehicle processing device 110), and this wheel related parameter is transmitted to the remote processing arrangement 120, which performs an enhanced wheel monitoring functionality based on the parameter. The parameter may e.g. be transmitted via a wireless link in the vehicle 200. The wireless link may e.g. be a mobile communications network or a Bluetooth connection. The parameter may be transmitted from the at least one vehicle processing device 110, or directly from the sensor 130, if the wheel related parameter is the same as the wheel related measurement.

It may be enough if the basic wheel monitoring functionality is arranged to issue a general wheel related warning based on the basic wheel monitoring functionality. This warning may not have to specify which wheel or wheels that has a problem (e.g. are under-inflated or loose) - it may be enough that it warns the driver of a potential wheel related problem. However, if the basic wheel monitoring functionality is able to reliably determine problems regarding individual wheels (e.g. which exact tires that are under-inflated), this may of course be done.

The enhanced wheel monitoring functionality provides further information regarding the determined problem with one or more of the wheels, by performing calculations based on the at least one wheel related parameter, preferably using algorithms that are continuously trained based on real-world vehicle data from a number of vehicles, e.g. using machine learning. The enhanced wheel monitoring functionality should preferably determine problems regarding individual wheels, such as which wheels that are under-inflated or loose. This may e.g. be done using an isolation function. If the enhanced wheel monitoring functionality is web-based or arranged in the cloud, the isolation function may be continuously trained based on real-world vehicle data, e.g. using machine learning, e.g. involving a neural network. If the enhanced wheel monitoring functionality is arranged in a mobile device, such as e.g. a smartphone, it can be updated from the web or the cloud, where it has been trained based on real-world vehicle data.

The enhanced wheel monitoring functionality may involve determining the pressure trend for a tire and/or how close the tire pressure is to the under-inflation alarm level, and/or a determination of the tire wear. If the enhanced wheel monitoring functionality involves also determining tire wear, the tire wear information may be communicated to the vehicle so that it can be compensated for in the basic wheel monitoring functionality.

The result of the enhanced wheel monitoring functionality may be transmitted back from the remote processing arrangement 120 to the at least one vehicle processing device 110. However, if the remote processing arrangement 120 is arranged in a mobile device, such as e.g. a smartphone, the result may also, or alternatively, be displayed on an interface of the mobile device, such as in an app.

The enhanced wheel monitoring functionality may be arranged to only be performed if the basic wheel monitoring functionality has determined that there is a problem with one or more of the wheels. There may be no need to perform the enhanced wheel monitoring functionality if there are no problems with any of the wheels. This means that there may also be no need to determine a wheel related parameter and transfer this to the remote processing arrangement if the basic wheel monitoring functionality has not determined that there is a problem with one or more of the wheels.

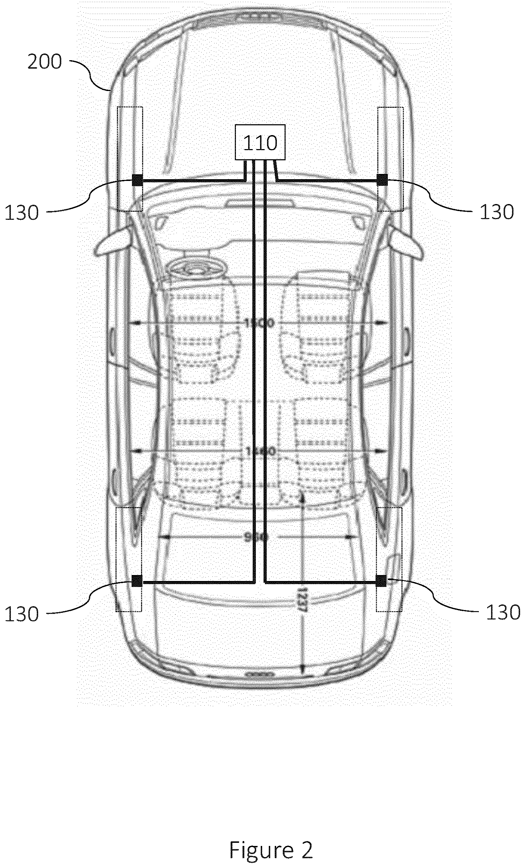

Figure 2 schematically illustrates a vehicle 200, in accordance with one or more embodiments described herein. The vehicle 200 comprises at least one vehicle processing device 110, which may e.g. be an ECU of the vehicle 200. The at least one vehicle processing device 110 may be arranged anywhere in the vehicle 200.

The vehicle 200 shown in figure 2 comprises four rotational speed sensors 130, one for each wheel. The signals from the sensors 130 are transmitted to the at least one vehicle processing device 110, where they are used as a basis for a basic wheel monitoring functionality, determining whether there is a problem with one or more of the wheels. The basic wheel monitoring functionality may e.g. determine tire under-inflation or loose wheel problems by performing calculations in ways known in the art based on signals from the sensors 130. The basic wheel monitoring functionality preferably uses predefined algorithms that are stored in the vehicle processing device 110 for determining whether there is a problem with one or more of the wheels.

The signals from the sensors 130 may also be communicated to a remote processing arrangement 120 separate from the vehicle, where they are used as a basis for an enhanced wheel monitoring functionality, providing further information regarding the determined problem with one or more of the wheels. Alternatively, the signals from the sensors 130 are first processed, e.g. in the at least one vehicle processing device 110, in order to determine a wheel related parameter, which may then be communicated to the remote processing arrangement 120. The enhanced wheel monitoring functionality provides further information regarding the tire under-inflation or loose wheel problem detected by the basic wheel monitoring functionality by performing calculations on the signals from the sensors 130, in raw or processed form. The enhanced wheel monitoring functionality preferably uses algorithms that are continuously trained based on real-world vehicle data from a number of vehicles, e.g. using machine learning.

The sensors 130 may also be other types of sensors. For determining load changes in the vehicle, information about e.g. the torque and the engine RPM may be needed, and this can e.g. be determined based on measurements from various engine sensors. A pressure sensor such as e.g. a barometer may be used to determine the altitude, and based on this determine whether the vehicle is driving uphill or downhill. Various types of accelerometers and/or gyroscopes, e.g. in the form of an inertial measurement unit (IMU), may be used to determine e.g. yaw rate, pitch, roll, longitudinal acceleration, lateral acceleration and vertical acceleration, to be used for determine load changes in the vehicle. Axle height information may e.g. be provided by sensors which are arranged in the vehicle for adapting the direction of the vehicle lights. The absolute velocity may e.g. be determined using a GPS sensor, or using another velocity recognizing sensor such as a camera, a radar, an IR sensor, or a laser sensor. Information from a temperature sensor may assist in determining both friction and tire pressure.

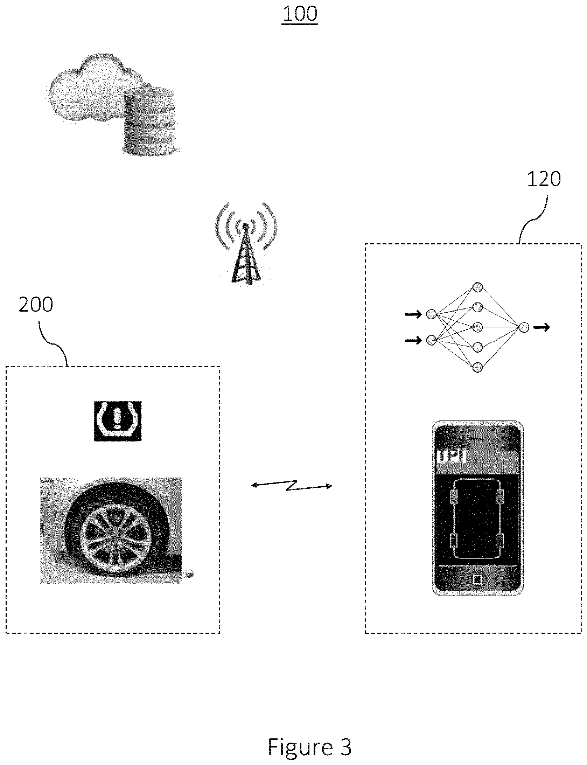

Figure 3 is a schematic overview of one way of operating a system 100 for wheel monitoring in a vehicle 200, in accordance with one or more embodiments described herein. If the basic wheel monitoring functionality in the vehicle 200 detects a tire under-inflation, a general tire pressure warning is issued in the vehicle. At least one wheel related parameter is then transmitted to a remote processing arrangement 120 (in figure 3 comprised in a smartphone), where an enhanced wheel monitoring functionality is performed. As a result of this enhanced wheel monitoring functionality, the exact tires that are under-inflated are shown on the display of the smartphone. The enhanced wheel monitoring functionality in the smartphone may be constantly updated.

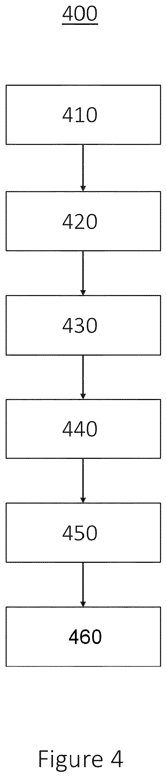

Figure 4 schematically illustrates a method 400 for wheel monitoring in a vehicle 200 comprising at least one vehicle processing device 110 and at least one sensor 130, in accordance with one or more embodiments described herein. The method comprises:
Step 410: generating at least one wheel related measurement using the at least one sensor 130.
Step 420: receiving said at least one wheel related measurement in the at least one vehicle processing device 110.
Step 430: performing a basic wheel monitoring functionality, determining whether there is a problem with one or more of the wheels, based on said at least one wheel related measurement in the at least one vehicle processing device 110.
Step 440: determining at least one wheel related parameter based on the at least one wheel related measurement.
Step 450: receiving said at least one wheel related parameter in a remote processing arrangement 120 arranged separate from the vehicle 200.
Step 460: performing an enhanced wheel monitoring functionality, providing further information regarding the determined problem with one or more of the wheels, by performing calculations based on said at least one wheel related parameter in the remote processing arrangement 120.

The basic wheel monitoring functionality may e.g. issue a wheel related warning if the basic wheel monitoring functionality determines that there is a problem with one or more of the wheels. This warning may not have to specify which wheels that have a problem - it may be enough that it warns the driver of a potential wheel related problem.

The enhanced wheel monitoring functionality may e.g. determine problems and provide warnings regarding individual wheels, e.g. using an isolation function. If this functionality is web-based or arranged in the cloud, the isolation function may be continuously trained based on real-world vehicle data. The determination may be transmitted back from the remote processing arrangement 120 to the at least one vehicle processing device 110.

The at least one wheel related parameter may e.g. be determined in the at least one vehicle processing device 110. The wheel related parameter may be the same as the wheel related measurement, or a processed form of the wheel related measurement, such as e.g. the conversion of discrete pulses to a continuous signal. In embodiments, the wheel related parameter is calculated based on at least one wheel related measurement using an algorithm.

The enhanced wheel monitoring functionality may e.g. be arranged to only be performed if the basic wheel monitoring functionality has determined that there is a problem with one or more of the wheels, since there may be no need to perform the enhanced wheel monitoring functionality if there are no problems with any of the wheels. This means that there may also be no need to determine a wheel related parameter and transfer this to the remote processing arrangement if the basic wheel monitoring functionality has not determined that there is a problem with one or more of the wheels.

The at least one wheel related parameter may e.g. be received in the remote processing arrangement 120, which may be arranged in a mobile device, such as a smartphone, via a wireless link from the vehicle 200. The enhanced wheel monitoring functionality may e.g. determine a tire wear level and communicate this information to the at least one vehicle processing device 110.

The enhanced wheel monitoring functionality may e.g. determine a pressure trend for a tire and/or how close the tire pressure is to an under-inflation alarm level. The enhanced wheel monitoring functionality may also detect a slow diffusion of air from a tire.

The remote processing arrangement may e.g. be arranged in a mobile device, such as a smartphone. This enables the enhanced wheel monitoring functionality to be used even when there is no mobile communications network connection, if the at least one wheel related parameter is transmitted wirelessly from the vehicle to the mobile device using e.g. Bluetooth.

The at least one wheel related parameter may e.g. be received in the remote processing arrangement 120 via a wireless link from the vehicle 200. The wireless link may e.g. be a mobile communications network or a Bluetooth connection.

## Claims

1. System (100) for wheel monitoring in a vehicle (200), the system (100) comprising:
at least one sensor (130), which is arranged in the vehicle (200) for generating at least one wheel related measurement, wherein the at least one sensor comprises a rotational speed sensor (130) for each wheel;
at least one vehicle processing device (110), which is included in the vehicle (200); and
a remote processing arrangement (120), which is separate from the vehicle (200);
wherein the at least one vehicle processing device (110) is arranged to receive at least one wheel related measurement from the at least one sensor (130), and based on this perform a basic wheel monitoring functionality, determining whether there is a problem with one or more of the wheels, and the remote processing arrangement (120) is arranged to receive at least one wheel related parameter, determined based on said at least one wheel related measurement, and perform an enhanced wheel monitoring functionality, providing further information regarding the determined problem with one or more of the wheels, by performing calculations based on said at least one wheel related parameter.

2. System (100) according to claim 1, wherein the at least one vehicle processing device (110) is arranged to issue a wheel related warning if the basic wheel monitoring functionality determines that there is a problem with one or more of the wheels.

3. System (100) according to claim 1 or 2, wherein the enhanced wheel monitoring functionality is arranged to determine problems and provide warnings regarding individual wheels.

4. System (100) according to any one of the preceding claims, wherein the at least one vehicle processing device (110) is arranged to determine the at least one wheel related parameter.

5. Vehicle (200) comprising at least one vehicle processing device (110) and at least one sensor (130), which is arranged to generate at least one wheel related measurement, wherein the at least one sensor comprises a rotational speed sensor (130) for each wheel, and wherein the at least one vehicle processing device (110) is arranged to:
receive at least one wheel related measurement from the at least one sensor (130);
perform a basic wheel monitoring functionality, determining whether there is a problem with one or more of the wheels, based on said at least one wheel related measurement;
determine at least one wheel related parameter based on the at least one wheel related measurement; and
communicate said at least one wheel related parameter to a remote processing arrangement (120) separate from the vehicle, in which remote processing arrangement (120) an enhanced wheel monitoring functionality, providing further information regarding the determined problem with one or more of the wheels, is performed by performing calculations based on said at least one wheel related parameter.

6. Method (400) for wheel monitoring in a vehicle (200) comprising at least one vehicle processing device (110) and at least one sensor (130), wherein the at least one sensor comprises a rotational speed sensor (130) for each wheel, the method (400) comprising:
generating (410) at least one wheel related measurement using the at least one sensor (130);
receiving (420) said at least one wheel related measurement in the at least one vehicle processing device (110);
performing (430) basic wheel monitoring functionality, determining whether there is a problem with one or more of the wheels, based on said at least one wheel related measurement in the at least one vehicle processing device (110);
determining (440) at least one wheel related parameter based on the at least one wheel related measurement;
receiving (450) said at least one wheel related parameter in a remote processing arrangement (120) arranged separate from the vehicle (200); and
performing (460) enhanced wheel monitoring functionality, providing further information regarding the determined problem with one or more of the wheels, by performing calculations based on said at least one wheel related parameter in the remote processing arrangement (120).

7. Method (400) according to claim 6, wherein the basic wheel monitoring functionality issues a wheel related warning if the basic wheel monitoring functionality determines that there is a problem with one or more of the wheels.

8. Method (400) according to claim 6 or 7, wherein the enhanced wheel monitoring functionality determines problems and provides warnings regarding individual wheels.

9. Method (400) according to any one of claims 6-8, wherein the at least one wheel related parameter is determined in the at least one vehicle processing device (110).

10. Method (400) according to any one of claims 6-9, wherein the enhanced wheel monitoring functionality is only performed if the basic wheel monitoring functionality has determined that there is a problem with one or more of the wheels.

11. Method (400) according to any one of claims 6-10, wherein the enhanced wheel monitoring functionality determines a tire wear level and communicates this information to the at least one vehicle processing device (110).

12. Method (400) according to any one of claims 6-11, wherein the enhanced wheel monitoring functionality determines a pressure trend for a tire and/or how close the tire pressure is to an under-inflation alarm level.

13. Method (400) according to any one of claims 6-12, wherein the enhanced wheel monitoring functionality detects a slow diffusion of air from a tire.

## Patentansprüche

1. System (100) zur Radüberwachung in einem Fahrzeug (200), wobei das System (100) umfasst:
wenigstens einen Sensor (130), der in dem Fahrzeug (200) eingerichtet ist, um wenigstens eine radbezogene Messung zu erzeugen, wobei der wenigstens eine Sensor einen Drehzahlsensor (130) für jedes Rad umfasst;
wenigstens eine Fahrzeugverarbeitungsvorrichtung (110), die in dem Fahrzeug (200) enthalten ist; und
eine Fernverarbeitungsanordnung (120), die von dem Fahrzeug (200) getrennt ist;
wobei die wenigstens eine Fahrzeugverarbeitungsvorrichtung (110) so eingerichtet ist, dass sie wenigstens eine radbezogene Messung von dem wenigstens einen Sensor (130) empfängt und auf der Grundlage dessen eine grundlegende Radüberwachungsfunktionalität durchführt, die feststellt, ob es ein Problem mit einem oder mehreren der Räder gibt, und die Fernverarbeitungsanordnung (120) so eingerichtet ist, dass sie wenigstens einen radbezogenen Parameter empfängt, der auf der Grundlage der wenigstens einen radbezogenen Messung bestimmt wird, und eine erweiterte Radüberwachungsfunktionalität durchführt, die weitere Informationen bezüglich des festgestellten Problems mit einem oder mehreren der Räder bereitstellt, indem sie Berechnungen auf der Grundlage des wenigstens einen radbezogenen Parameters durchführt.

2. System (100) nach Anspruch 1, wobei die wenigstens eine Fahrzeugverarbeitungsvorrichtung (110) so eingerichtet ist, dass sie eine radbezogene Warnung ausgibt, wenn die grundlegende Radüberwachungsfunktionalität feststellt, dass es ein Problem mit einem oder mehreren der Räder gibt.

3. System (100) nach Anspruch 1 oder 2, wobei die erweiterte Radüberwachungsfunktionalität so eingerichtet ist, dass sie Probleme feststellt und Warnungen bezüglich einzelner Räder bereitstellt.

4. System (100) nach einem der vorhergehenden Ansprüche, wobei die wenigstens eine Fahrzeugverarbeitungsvorrichtung (110) so eingerichtet ist, dass sie den wenigstens einen radbezogenen Parameter bestimmt.

5. Fahrzeug (200), das wenigstens eine Fahrzeugverarbeitungsvorrichtung (110) und wenigstens einen Sensor (130) umfasst, der eingerichtet ist, um wenigstens eine radbezogene Messung zu erzeugen, wobei der wenigstens eine Sensor einen Drehzahlsensor (130) für jedes Rad umfasst, und wobei die wenigstens eine Fahrzeugverarbeitungsvorrichtung (110) eingerichtet ist, um:
wenigstens eine radbezogene Messung von dem wenigstens einen Sensor (130) zu empfangen;
eine grundlegende Radüberwachungsfunktionalität auf der Grundlage der wenigstens einen radbezogenen Messung durchzuführen, die bestimmt, ob es ein Problem mit einem oder mehreren der Räder gibt;
wenigstens einen radbezogenen Parameter auf der Grundlage der wenigstens einen radbezogenen Messung zu bestimmen; und
den wenigstens einen radbezogenen Parameter an eine von dem Fahrzeug getrennte Fernverarbeitungsanordnung (120) zu übermitteln, wobei Fernverarbeitungsanordnung (120) eine erweiterte Radüberwachungsfunktionalität, die weitere Informationen bezüglich des festgestellten Problems mit einem oder mehreren der Räder bereitstellt, durch Ausführen von Berechnungen auf der Grundlage des wenigstens einen radbezogenen Parameters durchführt.

6. Verfahren (400) zur Radüberwachung in einem Fahrzeug (200), umfassend wenigstens eine Fahrzeugverarbeitungsvorrichtung (110) und wenigstens einen Sensor (130), wobei der wenigstens eine Sensor einen Drehzahlsensor (130) für jedes Rad umfasst, wobei das Verfahren (400) umfasst:
Erzeugen (410) wenigstens einer radbezogenen Messung unter Verwendung des wenigstens einen Sensors (130);
Empfangen (420) der wenigstens einen radbezogenen Messung in der wenigstens einen Fahrzeugverarbeitungsvorrichtung (110);
Durchführen (430) einer grundlegenden Radüberwachungsfunktionalität, Bestimmen, ob es ein Problem mit einem oder mehreren der Räder gibt, auf der Grundlage der wenigstens einen radbezogenen Messung in der wenigstens einen Fahrzeugverarbeitungsvorrichtung (110);
Bestimmen (440) wenigstens eines radbezogenen Parameters auf der Grundlage der wenigstens einen radbezogenen Messung;
Empfangen (450) des wenigstens einen radbezogenen Parameters in einer von dem Fahrzeug (200) getrennt eingerichteten Fernverarbeitungsanordnung (120); und
Durchführen (460) erweiterter Radüberwachungsfunktionalität, die weitere Informationen bezüglich des festgestellten Problems mit einem oder mehreren der Räder bereitstellt, indem Berechnungen auf der Grundlage des wenigstens einen radbezogenen Parameters in der Fernverarbeitungsanordnung (120) durchgeführt werden.

7. Verfahren (400) nach Anspruch 6, wobei die grundlegende Radüberwachungsfunktionalität eine radbezogene Warnung ausgibt, wenn die grundlegende Radüberwachungsfunktionalität feststellt, dass es ein Problem mit einem oder mehreren der Räder gibt.

8. Verfahren (400) nach Anspruch 6 oder 7, wobei die erweiterte Radüberwachungsfunktionalität Probleme feststellt und Warnungen bezüglich einzelner Räder ausgibt.

9. Verfahren (400) nach einem der Ansprüche 6-8, wobei der wenigstens eine radbezogene Parameter in der wenigstens einen Fahrzeugverarbeitungsvorrichtung (110) bestimmt wird.

10. Verfahren (400) nach einem der Ansprüche 6-9, wobei die erweiterte Radüberwachungsfunktionalität nur durchgeführt wird, wenn die grundlegende Radüberwachungsfunktionalität festgestellt hat, dass es ein Problem mit einem oder mehreren der Räder gibt.

11. Verfahren (400) nach einem der Ansprüche 6-10, wobei die erweiterte Radüberwachungsfunktionalität einen Reifenverschleißgrad bestimmt und diese Informationen an die wenigstens eine Fahrzeugverarbeitungsvorrichtung (110) übermittelt.

12. Verfahren (400) nach einem der Ansprüche 6-11, wobei die erweiterte Radüberwachungsfunktionalität einen Drucktrend für einen Reifen bestimmt und / oder feststellt, wie nahe der Reifendruck an einer Alarmschwelle für zu geringen Luftdruck ist.

13. Verfahren (400) nach einem der Ansprüche 6-12, wobei die erweiterte Radüberwachungsfunktionalität eine langsame Diffusion von Luft aus einem Reifen erkennt.

## Revendications

1. Système (100) de surveillance des roues d'un véhicule (200), le système (100) comprenant :
au moins un capteur (130), qui est agencé dans le véhicule (200) pour générer au moins une mesure liée à la roue, ledit au moins un capteur comprenant un capteur (130) de vitesse de rotation pour chaque roue ;
au moins un dispositif de traitement (110) de véhicule, qui est inclus dans le véhicule (200) ; et
un agencement (120) de traitement à distance, qui est séparé du véhicule (200) ;
ledit au moins un dispositif de traitement (110) de véhicule étant agencé de façon à recevoir au moins une mesure liée à la roue en provenance dudit au moins un capteur (130), et sur cette base effectuer une fonctionnalité basique de surveillance de roue, déterminant s'il y a un problème avec une ou plusieurs des roues, et l'agencement (120) de traitement à distance étant agencé de façon à recevoir au moins un paramètre lié à la roue, déterminé sur la base de ladite au moins une mesure liée à la roue, et pour mettre en oeuvre une fonctionnalité améliorée de surveillance de roue, fournissant des informations supplémentaires concernant le problème déterminé avec une ou plusieurs des roues, en effectuant des calculs basés sur ledit au moins un paramètre lié à la roue.

2. Système (100) selon la revendication 1, dans lequel ledit au moins un dispositif de traitement (110) de véhicule est agencé de façon à émettre un avertissement lié à la roue si la fonctionnalité basique de surveillance de roue détermine qu'il y a un problème avec une ou plusieurs des roues.

3. Système (100) selon la revendication 1 ou la revendication 2, dans lequel la fonctionnalité améliorée de surveillance de roue est agencée pour déterminer des problèmes et fournir des avertissements concernant des roues individuelles.

4. Système (100) selon l'une quelconque des revendications précédentes, dans lequel ledit au moins un dispositif de traitement (110) de véhicule est agencé de façon à déterminer ledit au moins un paramètre lié à la roue.

5. Véhicule (200) comprenant au moins un dispositif de traitement (110) de véhicule et au moins un capteur (130), qui est agencé de façon à générer au moins une mesure liée à la roue, ledit au moins un capteur comprenant un capteur (130) de vitesse de rotation pour chaque roue, et ledit au moins un dispositif de traitement (110) de véhicule étant agencé de façon à :
recevoir au moins une mesure liée à la roue en provenance dudit au moins un capteur (130) ;
mettre en oeuvre une fonctionnalité basique de surveillance de roue, déterminer s'il y a un problème avec une ou plusieurs des roues, sur la base de ladite au moins une mesure liée à la roue ;
déterminer au moins un paramètre lié à la roue sur la base de ladite au moins une mesure liée à la roue ; et
communiquer ledit au moins un paramètre lié à la roue à un agencement (120) de traitement à distance séparé du véhicule, dans lequel agencement (120) de traitement à distance une fonctionnalité améliorée de surveillance de roue, fournissant des informations supplémentaires concernant le problème déterminé sur une ou plusieurs des roues, est mise en oeuvre en effectuant des calculs sur la base dudit au moins un paramètre lié à la roue.

6. Procédé (400) de surveillance de roues dans un véhicule (200) comprenant au moins un dispositif de traitement (110) de véhicule et au moins un capteur (130), ledit au moins un capteur comprenant un capteur (130) de vitesse de rotation pour chaque roue, le procédé (400) comprenant :
le fait (410) de générer au moins une mesure liée à la roue en utilisant ledit au moins un capteur (130) ;
le fait (420) de recevoir ladite au moins une mesure relative à la roue dans ledit au moins un dispositif de traitement (110) de véhicule ;
le fait (430) d'mettre en oeuvre une fonctionnalité basique de surveillance de roue, déterminant s'il y a un problème avec une ou plusieurs des roues, sur la base de ladite au moins une mesure liée à la roue dans ledit au moins un dispositif de traitement (110) de véhicule ;
le fait (440) de déterminer au moins un paramètre lié à la roue sur la base de ladite au moins une mesure liée à la roue ;
le fait (450) de recevoir ledit au moins un paramètre lié à la roue dans un agencement (120) de traitement à distance agencé de façon séparée du véhicule (200) ; et
le fait (460) de mettre en oeuvre une fonctionnalité améliorée de surveillance de roue, fournissant des informations supplémentaires concernant le problème déterminé avec une ou plusieurs des roues, en effectuant des calculs basés sur ledit au moins un paramètre lié à la roue dans l'agencement (120) de traitement à distance.

7. Procédé (400) selon la revendication 6, dans lequel la fonctionnalité basique de surveillance de roue émet un avertissement lié à la roue si la fonctionnalité basique de surveillance de roue détermine qu'il y a un problème avec une ou plusieurs des roues.

8. Procédé (400) selon la revendication 6 ou la revendication 7, dans lequel la fonctionnalité améliorée de surveillance de roue détermine des problèmes et fournit des avertissements concernant les roues individuelles.

9. Procédé (400) selon l'une quelconque des revendications 6 à 8, dans lequel ledit au moins un paramètre lié à la roue est déterminé dans ledit au moins un dispositif de traitement (110) de véhicule.

10. Procédé (400) selon l'une quelconque des revendications 6 à 9, dans lequel la fonctionnalité améliorée de surveillance de roue n'est mise en oeuvre que si la fonctionnalité basique de surveillance de roue a déterminé qu'il y a un problème avec une ou plusieurs des roues.

11. Procédé (400) selon l'une quelconque de c revendications 6 à 10, dans lesquelles la fonctionnalité améliorée de surveillance de roue détermine un niveau d'usure de pneu et communique cette information audit au moins un dispositif de traitement (110) de véhicule.

12. Procédé (400) selon l'une quelconque des revendications 6 à 11, dans lequel la fonctionnalité améliorée de surveillance de roue détermine une tendance de pression pour un pneu et/ou à quel point la pression des pneus est proche d'un niveau d'alarme de sous-gonflage.

13. Procédé (400) selon l'une quelconque des revendications 6 à 12, dans lequel la fonctionnalité améliorée de surveillance de roue détecte une diffusion lente d'air à partir d'un pneu.
